# EUROPEAN PATENT APPLICATION

(11) **EP 4 800 573 A1**
(43) Date of publication of application: **02.09.2026**
(21) Application number: 26155682.3
(22) Date of filing: 02.02.2026
(51) Int. Cl.: G06F 16/9032, G06F 9/451

(54) **DEVICE SELF-HELP SYSTEM USING A LANGUAGE MODEL ENHANCED BY RETRIEVAL-AUGMENTED-GENERATION AND SYSTEM ANALYTICS**

(30) Priority: 26.02.2025 US 202519064528
(71) Applicant: Avago Technologies International Sales Pte. Limited, Singapore 768923 (SG)
(72) Inventor: Saifee, Qutubuddin, 560103 Bangalore, KA (IN); Ranmale, Rajendra Shankar, 560103 Bangalore, KA (IN)
(74) Representative: Grünecker Patent- und Rechtsanwälte PartG mbB

(57) **Abstract**

A user device is configured to provide device assistance to a user of the user device, by performing the steps of: detecting a query provided by the user, the query prompting the user device for help resolving an issue; generating user manual context using a retrieval-augmented generation (RAG) neural network; identifying, from state information about the user device, a subset of the state information that is associated with the query; generating device assistance information for the issue using a local language neural network, the device assistance information containing at least one of: (1) identification of a system action for the user device to perform and (2) a message for the user; in response to the device assistance information identifying the system action, executing the system action at the user device; and in response to the device assistance information containing the message, outputting the message from the user device.

## Description

### Background

There is a desire for manufacturers of various devices to provide device self-help systems for their users. Device self-help systems are resources or platforms that enable users to independently diagnose and resolve issues without necessarily contacting customer support services. Such device self-help systems may be provided for a variety of devices, including, e.g., customer premise equipment such as cable modems, set-top boxes, and passive optical network devices. To make use of device self-help systems, users generally describe an issue that they are experiencing such as experiencing slow Internet connectivity. For example, if their device includes a microphone, the user may speak in order to verbally communicate their issue. In response, the device may determine a solution for resolving the user's issue, e.g., by referring to a knowledge base stored locally in the device or stored remotely. There is a desire to implement device self-help systems that are powerful and thus capable of resolving issues as effectively as possible.

### Summary

One or more embodiments provide a user device including a processor and memory, wherein the processor executes instructions stored in the memory to provide device assistance to a user of the user device. By executing such instructions, the user device performs the steps of: detecting a first query provided by the user, the first query prompting the user device for help resolving a first issue related to the user device; and generating first input tokens for a retrieval-augmented (RAG) neural network based on the first query and a user manual of the user device, and then generating first user manual context using the RAG neural network. The RAG neural network computes query embeddings based on query tokens of the first input tokens and computes user manual embeddings based on user manual tokens of the first input tokens, and the RAG neural network compares the query embeddings to the user manual embeddings to determine the first user manual context. The steps further include: identifying, from state information about the user device, a first subset of the state information that is associated with the first query; and generating second input tokens for a local language neural network based on the first query, the first user manual context, and the first subset of the state information, and then generating, using the local language neural network, first device assistance information for diagnosing or resolving the first issue.

The local language neural network performs operations at neurons of its layers based on the second input tokens to generate the first device assistance information. The first device assistance information contains at least one of: (1) identification of a system action for the user device to perform and (2) a message for the user. In response to the first device assistance information identifying the system action, the steps further include executing the system action at the user device. In response to the first device assistance information containing the message, the steps further include outputting the message from the user device. Further embodiments include a method comprising the above steps and a non-transitory computer-readable storage medium comprising instructions that cause a user device to carry out the above steps.

### Brief Description of the Drawings

Figure 1 is a block diagram of a computer system in which embodiments may be implemented.
Figure 2 is a flow diagram of a method that may be performed by a user device of the computer system to detect a query of a user, select a language neural network for generating device self-help assistance information, and determine inputs for the selected language neural network, according to some embodiments.
Figure 3 is a flow diagram of a method that may be performed by the user device to generate the device self-help assistance information using a local language neural network, according to some embodiments.
Figure 4 is a flow diagram of a method that may be performed by the user device and a cloud computer of the computer system to generate the device self-help assistance information using a cloud language neural network, according to some embodiments.
Figure 5 is a flow diagram of a method that may be performed by the user device to provide device self-help assistance to the user based on the device self-help assistance information, according to some embodiments.

### Detailed Description

Techniques are described for implementing a device self-help system that effectively diagnoses and resolves issues that users encounter with their devices. The device self-help system utilizes various powerful computing models for resolving issues such as artificial neural networks (referred to herein simply as "neural networks"). A neural network is a machine-learning model consisting of interconnected layers of nodes, referred to as "neurons." A "neuron" is a fundamental unit or component of a neural network. Neurons in a neural network work together to process input data, transform it through layers of computation, and produce an output.

One model that may be used by embodiments is a language neural network, which is a neural network that is designed to process and generate human language. The language neural network is trained to analyze queries from users about issues the users are experiencing with a device. The language neural network outputs solutions for resolving those issues. For example, such solutions may include system actions for a device to automatically perform and messages to provide to the users.

Another model that may be used by embodiments is a retrieval-augmented generation (RAG) model such as a RAG neural network. Such a model is sometimes referred to as a "retriever." RAG is a method of enhancing the performance of a language model based on context that the language model was not previously trained with. A RAG neural network may be used to identify relevant documents or relevant portions of a document. For example, according to embodiments, a RAG neural network may analyze the latest user manual of a device and output sections that are relevant to a user's query. Such relevant sections may then be input to the language neural network to improve the language neural network's ability to generate effective solutions to a user's issues with their specific device.

In addition to using powerful computing models for generating effective solutions, embodiments make use of various contextual information for further enhancing generated solutions. Such contextual information includes state information (analytics) about a device such as, for example, video state information, audio state information, voice state information, networking state information, etc. Such state information provides insight to the correct solution to a user's issue. For example, the user manual may indicate several solutions for resolving an issue, but the above state information may indicate that some of such solutions will not resolve the issue. Accordingly, such contextual information may also be input to the language neural network (in addition to the query and output of the RAG neural network) to further improve the language neural network's ability to generate effective solutions.

In addition to bolstering the outputs of a language neural network, embodiments may allow for selecting among a plurality of language neural networks. A user's device may include a local language neural network. Additionally, a cloud computer remote from the user's device may include a separate cloud language neural network, which may be more powerful than the local language neural network. Which language neural network gets selected by embodiments may be based on various factors. For example, embodiments may bolster security and privacy by determining that inputs to the selected language neural network should be private. In such cases, the local language neural network may be used. As another example, embodiments may bolster the effectiveness of generating solutions by determining that a query requires significant processing power for effectively generating a solution to a user's issue. In such cases, the cloud language neural network may be used. These and further aspects of the invention are discussed below with respect to the drawings.

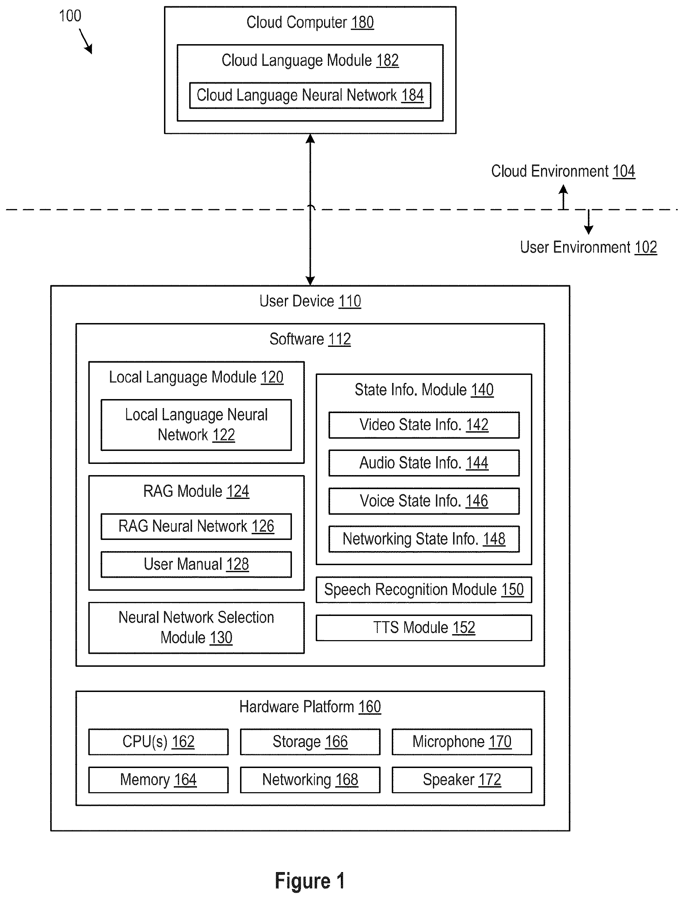

Figure 1 is a block diagram of a computer system 100 in which embodiments may be implemented. Computer system 100 includes a user environment 102 and a cloud environment 104. For example, user environment 102 may be the home of a user of a user device 110 such as a cable modem, set-top box, or passive optical network device, or may be a workplace of such a user. Cloud environment 104 may be, e.g., a private cloud provisioned in a private data center controlled by a particular organization or a public cloud provisioned in a public data center at which infrastructure is deployed for many different users and organizations.

User device 110 is constructed on a hardware platform 160. Hardware platform 160 includes hardware components such as one or more central processing units (CPUs) 162, memory 164 such as random-access memory (RAM), local storage 166 such as flash memory, networking hardware 168, a microphone 170, and a speaker 172. CPU(s) 162 are configured to execute instructions such as executable instructions that perform one or more operations described herein, which may be stored in memory 164. Networking hardware 168 enables user device 110 to communicate with other devices, e.g., with cloud computer 180 over the Internet and with devices in user environment 102 over a local area network (LAN) of user environment 102. For example, networking hardware 168 may include one or more of a wireless fidelity (Wi-Fi) chipset, a data over cable service interface specification (DOCSIS) chipset, and an optical transceiver chipset.

Microphone 170 is a device that captures ambient sound from around user device 110 by converting sound into electrical signals. Speaker 172 is a device that converts electrical signals into sound and outputs the sound from user device 110. As used herein, "ambient sound" is environmental noise occurring in a setting such as user environment 102, including, e.g., the voice of a user providing voice commands to user device 110 and any other background noise. As used herein, a "voice command" is an overall instruction that a user gives to user device 110, typically directing user device 110 to perform a specific action or task. A "query" is a portion of some voice commands, typically requesting information or clarification, and often phrased as a question. An example of a query is: "Why has my Internet connection been slow for the past hour?" A query may indicate an issue related to user device 110 such as slow Internet connectivity.

Although not illustrated in Figure 1, hardware platform 160 may include one or more XPUs for executing processing-intensive tasks such as generating inferences using neural networks. As used herein, an "XPU" includes any type of hardware accelerator, including a graphics processing unit (GPU), tensor processing unit (TPU), neural processing unit (NPU), field-programmable gate array (FPGA), or application-specific integrated circuit (ASIC). Some XPUs, referred to herein as "specific purpose XPUs," are hardware that is fixed in functionality at the time of manufacture. Examples of specific purpose XPUs include ASICs. Other XPUs, referred to herein as "general purpose XPUs," are hardware that can be programmed at the software level after manufacture to implement specific functions. Examples of general purpose XPUs include GPUs. Other XPUs, referred to herein as "programmable logic devices" (PLDs), are hardware that can be programmed at the hardware level after manufacture to perform specific functions. Examples of PLDs include FPGAs.

Hardware platform 160 supports software 112. Software 112 includes a local language module 120, a RAG module 124, a neural network selection module 130, a state information module 140, a speech recognition module 150, and a text-to-speech (TTS) module 152. Local language module 120 is a software component that uses a language model (e.g., local language neural network 122) to process and generate human language. Notably, local language neural network 122 is local to user device 110, i.e., executes on hardware platform 160. Examples of local language neural network 122 include, e.g., a recurrent neural network (RNN), long short-term memory network (LSTM), gated recurrent unit (GRU), convolutional neural network (CNN), transformer, etc. It should be noted that, according to some embodiments, at least a portion of local language neural network 122 may execute directly on hardware platform 160, e.g., on a GPU thereof.

RAG module 124 is a software component that uses a RAG model (e.g., RAG neural network 126) to identify relevant portions of a user manual 128. Such relevant portions are used to enhance the performance of language models, including local language neural network 122 and a cloud language neural network 184. For example, RAG neural network 126 may be a transformer such as bidirectional encoder representations from transformers (BERT). User manual 128 is a document that provides detailed instructions on how to use user device 110. User manual 128 includes various sections explaining features of user device 110 and explaining how to troubleshoot issues with user device 110. It should be noted that although user manual 128 is illustrated as being stored locally by user device 110, e.g., in storage 166, user manual 128 may be stored remotely from user device 110 and accessed by RAG module 124 on demand.

Neural network selection module 130 is a software component that may be used for selecting a language model to use for responding to a query. For any given query, such selection may be one of local language neural network 122 and cloud language neural network 184. For example, neural network selection module 130 may select local language neural network 122 when inputs to a language neural network should be kept private. Additionally, for example, neural network selection module 130 may select cloud language neural network 184 for responding to queries that require more processing power for responding to, e.g., more complex queries.

State information module 140 is a software component that may be used for managing various state information about user device 110. Such state information may include, e.g., video state information 142, audio state information 144, voice state information 146, and networking state information 148. Video state information 142 includes details about video display or processing of user device 110. For example, video state information 142 may include a current resolution of a video being displayed or processed by user device 110, a frame rate at which such video is being displayed, and any errors encountered by user device 110 in displaying or processing the video. Such errors may include, e.g., buffering issues that cause the video to pause or stutter, incorrect video settings that diminish the video quality, etc.

Audio state information 144 includes details about audio playback or processing of user device 110. For example, audio state information 144 may include a volume level of a video being displayed or processed by user device 110 and any errors encountered by user device 110 in such playback or processing. Such errors may include, e.g., errors in time stamp management (TSM), which is the process of organizing timestamps. Timestamps are records of exact times at which events or actions occur. Such timestamps are used for synchronizing audio and video, and errors in TSM may cause, e.g., the audio of a video to lag the video or the video to lag the audio.

Voice state information 146 includes details about processing of voice input to user device 110, e.g., through microphone 170, and voice output from user device 110, e.g., through speaker 172. For example, voice state information 146 may include a status of microphone 170 (e.g., active, muted, or idle) and a status of speaker 172 (e.g., speaking, muted, or idle). Additionally, for example, voice state information 146 may include errors in such voice input or voice output. Such errors may include, e.g., issues encountered in understanding voice commands from a user, which may be caused, e.g., by user device 110 being in a location that is not conducive to microphone 170 effectively capturing the user's voice.

Networking state information 148 includes details about connections of user device 110, e.g., to the Internet and to a LAN of user environment 102. For example, networking state information may include status information for such connections (e.g., connected, disconnected, or connecting), a downstream power level from an internet service provider (ISP), and an upstream power level to the ISP. Additionally, networking state information 148 may include errors such as packet loss or latency spikes encountered when transmitting data from user device 110.

Speech recognition module 150 is a software component that may detect voice commands from ambient sound captured by microphone 170. Speech recognition module 150 is configured to filter out background noise in the ambient sound to capture such voice commands. TTS module 152 is a software component that may convert text produced by a language neural network into speech that may be output, e.g., from speaker 172. For example, such speech may provide a response to a user's query.

Cloud environment 104 includes a cloud computer 180, which may be, e.g., a server computer. Cloud computer 180 is constructed on a hardware platform (not shown) such as an x86 architecture platform. Similar to hardware platform 160 of user device 110, the hardware platform of cloud computer 180 includes hardware components such as one or more CPUs, XPUs, memory, local storage, and networking hardware. The CPU(s) are configured to execute instructions such as executable instructions that perform one or more operations described herein, which may be stored in the memory. The networking hardware enables cloud computer 180 to communicate with other devices, e.g., with user device 110 over the Internet.

Cloud computer 180 includes a cloud language module 182. Cloud language module 182 is a software component that uses a language model (e.g., cloud language neural network 184) to process and generate human language. Notably, cloud language neural network 182 is remote from user device 110. Examples of cloud language neural network 184 include, e.g., an RNN, LSTM, GRU, CNN, transformer, etc. Cloud language neural network 184 may be a more powerful neural network than local language neural network 122, including, e.g., more neurons per layer and/or more layers. It should be noted that, according to some embodiments, at least a portion of cloud language neural network 184 may execute directly on the hardware platform of cloud computer 180, e.g., on a GPU thereof.

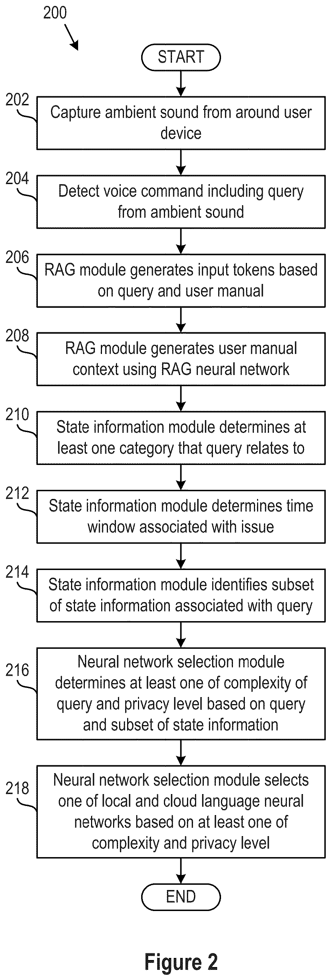

Figure 2 is a flow diagram of a method 200 that may be performed by user device 110 to detect a query of a user, select a language neural network for generating device self-help assistance information, and determine inputs for the selected language neural network, according to some embodiments. At step 202, user device 110 uses microphone 170 to capture ambient sound from around user device 110. At step 204, user device 110 uses speech recognition module 150 to detect a voice command from the ambient sound, the voice command including a query provided by the user that prompts user device 110 for help resolving an issue. For example, the query may indicate that the user needs help resolving slow Internet connectivity.

At step 206, RAG module 124 generates input tokens based on the query and user manual 128. The input tokens are the basic units of input data to RAG neural network 126. Such tokenizing breaks down the query and user manual 128 into smaller pieces that RAG neural network 126 can process, including input tokens based on the query, referred to herein as "query tokens," and input tokens based on user manual 128, referred to herein as "user manual tokens." For example, the input tokens may be units of meaning, such as words, sub-words, characters, or special symbols from the query and user manual 128. It should be noted that RAG module 124 may generate the user manual tokens at an earlier time. In other words, while RAG module 124 may generate the query tokens in real time, upon receiving the query, RAG module 124 may separately pre-generate the user manual tokens before receiving the query.

At step 208, RAG module 124 generates user manual context using RAG neural network 126. RAG module 124 inputs the input tokens to RAG neural network 126, and RAG neural network 126 performs operations at neurons of its layers based on the input tokens to generate the user manual context. The user manual context is information from user manual 128 that is relevant to the user's query. For example, if the user is experiencing slow Internet connectivity, the user manual context may include sections of user manual 128 related to diagnosing and resolving such issues for user device 110.

In particular, RAG neural network 126 may include "encoder layers" as well as "decoder layers" of neurons used to compute contextual embeddings from the input tokens. Such contextual embeddings are dense vectors in a high-dimensional space. The contextual embeddings represent the input tokens such as by capturing semantic relationships therebetween. RAG neural network 126 may compute contextual embeddings based on the query tokens, referred to herein as "query embeddings," and compute contextual embeddings based on the user manual tokens, referred to herein as "user manual embeddings."

RAG neural network 126 may then compare the query embeddings to the user manual embeddings to identify user manual embeddings that are closest (most similar) to the query embeddings. RAG neural network 126 may then determine the user manual context based on the closest user manual embeddings and output the user manual context. It should be noted that similar to the user manual tokens, RAG neural network 126 may compute the user manual embeddings at an earlier time. In other words, while RAG neural network 126 may compute the query embeddings in real time, upon the query being received and the query tokens being generated, RAG neural network 126 may separately pre-generate the user manual embeddings based on the user manual tokens before the query is received.

At step 210, state information module 140 determines at least one category that the user's query relates to, e.g., one of "video," "audio," "voice," and "networking." For example, if the query indicates that the user is experiencing slow Internet connectivity, state information module 140 may determine "networking" as a relevant category. At step 212, state information module 140 may determine a time window associated with the user's issue based on timing information indicated by the query. For example, if the user states in the query that they have "recently" begun experiencing slow Internet connectivity, such time window may be 1 hour. As another example, if the user states in the query that they have been experiencing slow Internet connectivity for a "week," such time window may be 1 week.

At step 214, state information module 140 identifies a subset of the state information of user device 110 associated with the query. For example, if state information module 140 determined the category "networking," state information module 140 may identify the subset of the state information from networking state information 148. Additionally, state information module 140 may identify the subset of the state information based on activity of user device 110 that occurred within the determined time window. For example, if the determined time window is 1 hour, state information module 140 may identify a portion of networking state information 148 that was logged within the past hour.

At step 216, neural network selection module 130 may determine at least one of: (1) a complexity of the query and (2) a privacy level based on the query and the subset of the state information. For example, the complexity and privacy level may be values such as percentages. Regarding complexity, for example, if the query is longer than a threshold such as a threshold number of words or characters, neural network selection module 130 may determine, e.g., a high percentage for complexity. If the query is shorter than such a threshold, neural network selection module 130 may determine, e.g., a low percentage. As another example, if the query includes highly technical terms or sophisticated language, neural network selection module 130 may determine, e.g., a high percentage. If the query does not include such terms or language, neural network selection module 130 may determine, e.g., a low percentage.

Regarding the privacy level, for example, the query or the subset of the state information may include information that has been predetermined to be sensitive. For example, either the query or subset of the state information may include information indicative of a user's password with a user account associated with user device 110. As another example, the subset of the state information may include a browsing history of the user. If the query or the subset of the state information include information that has been predetermined to be sensitive, neural network selection module 130 may determine, e.g., a high percentage for privacy level. On the other hand, if they do not include such sensitive information, neural network selection module 130 may determine, e.g., a low percentage.

At step 218, neural network selection module 130 may select one of local language neural network 122 and cloud language neural network 184 based on at least one of the complexity and privacy level. For example, if neural network selection module 130 determined a high percentage for privacy level, neural network selection module 130 may select local language neural network 122. As another example, if neural network selection module 130 determined a low percentage for privacy level and a high percentage for complexity, neural network selection module 130 may select cloud language neural network 184. As another example, if neural network selection module 130 determined a low percentage for both privacy level and complexity, neural network selection module 130 may select local language neural network 122. After step 218, method 200 ends.

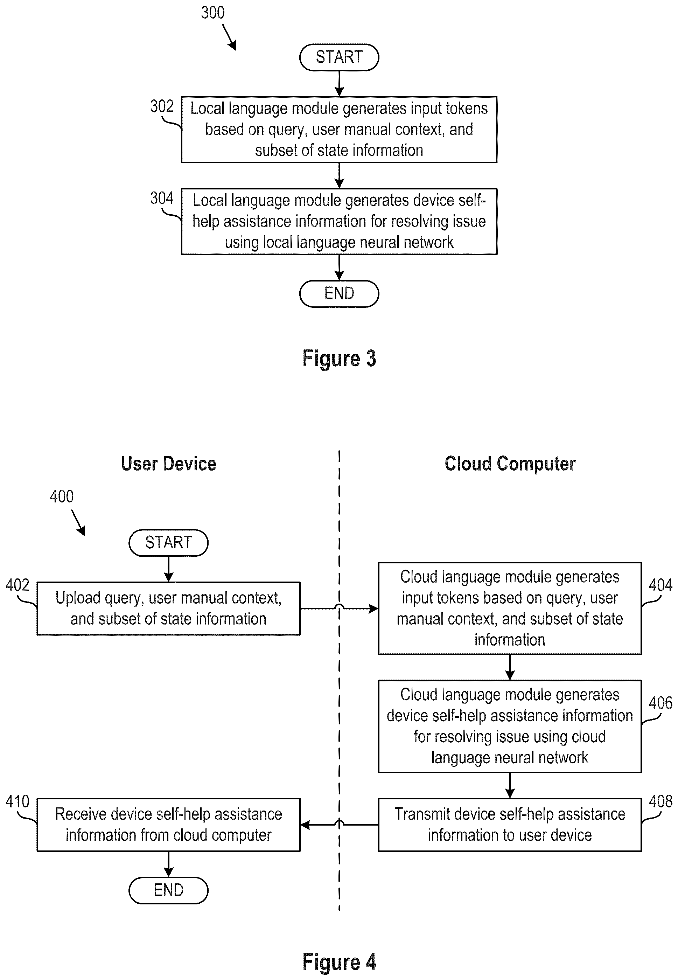

Figure 3 is a flow diagram of a method 300 that may be performed by user device 110 to generate device self-help assistance information using local language neural network 122, according to some embodiments. Method 300 may be performed after method 200 when neural network selection module 130 selects local language neural network 122. At step 302, local language module 120 generates input tokens based on: a user's query, user manual context generated by RAG neural network 126, and a subset of state information identified by state information module 140. The input tokens are the basic units of input data to local language neural network 122, and such tokenizing breaks down the query, user manual context, and subset of state information into smaller pieces that local language neural network 122 can process. For example, the input tokens may be units of meaning such as words, sub-words, etc.

It should be noted that local language module 120 may generate different query tokens based on the query than RAG module 124 generates based on the query, e.g., because the two modules use different "tokenizer" tools for generating input tokens. On the other hand, the two modules may generate the same query tokens based on the query, e.g.., because the two modules use the same tokenizer tool. Furthermore, according to some embodiments, local language module 120 may simply reuse the query tokens generated by RAG module 124 when generating the input tokens for local language neural network 122 instead of separately generating the query tokens.

At step 304, local language module 120 generates device self-help assistance information for diagnosing or resolving a user's issue using local language neural network 122. In particular, local language module 120 inputs the input tokens to local language neural network 122, and local language neural network 122 performs operations at neurons of its layers based on the input tokens to generate the device self-help assistance information. The device self-help assistance information is information associated with diagnosing or resolving an issue indicated by the user's query. Such information may include either or both of: (1) identification of a system action for user device 110 to perform and (2) a message to communicate to the user.

It should be noted that the device self-help assistance information may be generated based on each of the query, user manual context, and subset of the state information. For example, the device self-help assistance information may include solutions that are specific to user device 110, which may avoid providing information that is only relevant to other devices. Additionally, the device self-help assistance information may include solutions that are specific to the actual state of user device 110. For example, if a user is experiencing slow Internet connectivity but the subset of the state information indicates that the downstream power level is adequate, the device self-help assistance information may exclude solutions for checking or increasing such downstream power level. After step 304, method 300 ends.

Figure 4 is a flow diagram of a method 400 that may be performed by user device 110 and cloud computer 180 to generate device self-help assistance information using cloud language neural network 184, according to some embodiments. Method 400 may be performed after method 200 when neural network selection module 130 selects cloud language neural network 184. At step 402, user device 110 uploads a user's query, user manual context generated by RAG neural network 126, and a subset of state information identified by state information module 140, to cloud computer 180.

At step 404, cloud language module 182 generates input tokens based on the query, user manual context, and subset of the state information. The input tokens are the basic units of input data to cloud language neural network 184. Such tokenizing breaks down the query, user manual context, and subset of state information into smaller pieces that cloud language neural network 184 can process such as words, sub-words, etc. Similar to local language module 120, cloud language module 182 may generate different query tokens based on the query than RAG module 124 generates based on the query. On the other hand, the two modules may generate the same query tokens based on the query. Furthermore, according to some embodiments, user device 110 may upload the query tokens generated by RAG module 124 to cloud computer 180, to be reused by cloud language module 182.

At step 406, cloud language module 182 generates device self-help assistance information for diagnosing or resolving a user's issue using cloud language neural network 184. Similar to local language module 120, cloud language module 182 inputs the input tokens to cloud language neural network 184, and cloud language neural network 184 performs operations at neurons of its layers based on the input tokens to generate the device self-help assistance information. Similar to local language neural network 122, the generated device self-help assistance information may be generated based on each of the query, user manual context, and subset of the state information. At step 408, cloud computer 180 transmits the device self-help assistance information to user device 110. At step 410, user device 110 receives the device self-help assistance information from cloud computer 180. After step 410, method 400 ends.

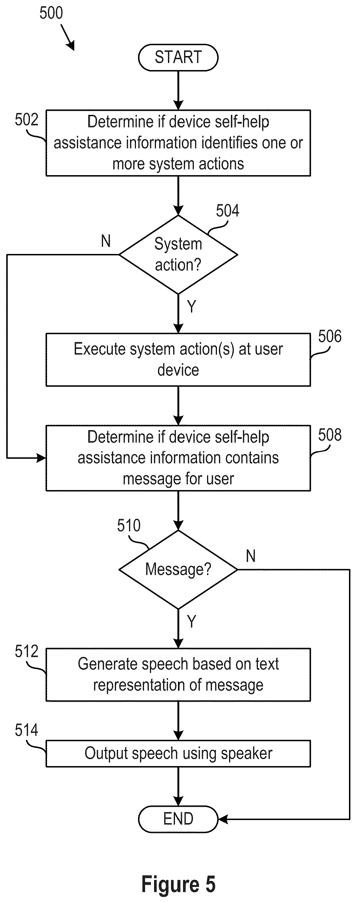

Figure 5 is a flow diagram of a method 500 that may be performed by user device 110 to provide device self-help assistance to the user based on device self-help assistance information, according to some embodiments. The device self-help assistance information may have been generated by either local language neural network 122 or cloud language neural network 184. At step 502, user device 110 determines whether the device self-help assistance information identifies one or more system actions. For example, the device self-help assistance information may instruct user device 110 to restart, which may resolve a user's issue.

As another example, the device self-help assistance information may instruct user device 110 to execute a command such as an application programming interface (API) command. As just some examples, such command may instruct user device 110 to measure a performance metric related to user device 110 or to change a setting related to user device 110. For example, if user device 110 is a cable modem or passive optical network device, the command may be a diagnostic command such as iperf3. The iperf3 command measures performance metrics of network connections such as the bandwidth and latency of such connections. As another example, if user device 110 is a set-top box, the command may be a command to change a resolution setting of a video to a desired resolution such as 3,840 x 2,160 pixels, also referred to as "4K."

At step 504, if the device self-help assistance information does not identify any system actions, method 500 moves to step 508. Otherwise, if the device self-help assistance information identifies at least one system action, method 500 moves to step 506. At step 506, user device 110 executes the identified system action(s), e.g., by restarting and/or executing the command to, for example, measure a performance metric related to user device 110 such as a performance metric of a network connection between user device 110 and another device, or to change a setting related to user device 110 such as the resolution of a video. At step 510, user device 110 determines whether the device self-help assistance information contains a message for the user. For example, the message may instruct the user to call their ISP to inquire about service issues on the ISP's end such as network congestion or infrastructure failures.

At step 510, if the device self-help assistance information does not contain a message, method 500 ends. Otherwise, if the device self-help assistance information contains a message, method 500 moves to step 512. At step 512, user device 110 may use TTS module 152 to generate speech based on a text representation of the message. At step 514, user device 110 may output the generated speech using speaker 172. After step 514, method 500 ends.

It should be noted that some devices such as older (i.e., legacy) cable modems, set-top boxes, and passive optical network devices may not have some of the capabilities described for user device 110. For example, such legacy devices may not have a microphone or speaker. As another example, such legacy devices may not have sufficient computing power for executing local language neural network 122. Accordingly, according to alternative embodiments, some of the functionalities described above for user device 110 may be offloaded to a separate device.

For example, if a user is experiencing issues with a legacy device that does not have a microphone or speaker, the user may speak to a separate device to communicate the query. The separate device may then communicate the query to the legacy device. The legacy device may then generate user manual context, identify a subset of state information, and select a language neural network, in the manner discussed for user device 110 in conjunction with Figure 2. The legacy device may then further generate device self-help assistance information or acquire device self-help assistance information from cloud computer 180, in the manner discussed for user device 110 in conjunction with Figures 3 and 4. The legacy device may then further execute system actions based on the device self-help assistance information, in the manner discussed for user device 110 in conjunction with Figure 5. The legacy device may communicate messages from the device self-help assistance information to the separate device for the separate device to output using a speaker thereof, in the manner discussed for user device 110 in conjunction with Figure 5.

As another example, if a user is experiencing issues with a legacy device that does not include local language neural network 122, such execution may be performed by a separate device that does have the requisite computing power. The separate computing device may generate device self-help assistance information, in the manner discussed for user device 110 in conjunction with Figure 3, or acquire device self-help assistance information from cloud computer 180, in the manner discussed for user device 110 in conjunction with Figure 4. The separate computing device may then transmit the device self-help assistance information to the legacy device. The legacy device may execute system actions and/or output messages based on device self-help assistance information using a speaker thereof, in the manner discussed for user device 110 in conjunction with Figure 5.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, solid-state drives (SSDs), network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

As used herein, the phrase "at least one of" preceding a series of items with the term "and" or "or" to separate any of the items, modifies the list as a whole, rather than each member of the list (i.e., each item). The phrase "at least one of" does not require selection of at least one of each item listed. Rather, the phrase allows a meaning that includes at least one of any one of the items, and/or at least one of any combination of the items. By way of example, the phrases "at least one of A, B, and C" and "at least one of A, B, or C" each refers to only A, only B, only C, and/or any combination of A, B, and C. In any instances in which it is intended that a selection be of "at least one of each of A, B, and C," or alternatively, "at least one of A, at least one of B, and at least one of C," the selection is expressly described as such.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

The following are further embodiments of the invention:
1. A user device including a processor and memory, wherein the processor executes instructions stored in the memory to provide device assistance to a user of the user device by performing the following steps:
   detecting a first query provided by the user, the first query prompting the user device for help resolving a first issue related to the user device;
   generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
   identifying, from state information about the user device, a first subset of the state information that is associated with the first query;
   generating second input tokens for a local language neural network based on the first query, the first user manual context, and the first subset of the state information, and then generating, using the local language neural network, first device assistance information for diagnosing or resolving the first issue, the local language neural network performing operations at neurons of its layers based on the second input tokens to generate the first device assistance information, and the first device assistance information containing at least one of: (1) identification of a system action for the user device to perform and (2) a message for the user;
   in response to the first device assistance information identifying the system action, executing the system action at the user device; and
   in response to the first device assistance information containing the message, outputting the message from the user device.
2. The user device of embodiment 1, wherein the steps further include:
   determining at least one of: (1) a complexity of the first query and (2) a privacy level based on at least one of the first query and the first subset of the state information; and
   selecting the local language neural network from a plurality of language neural networks based on the at least one of the complexity and the privacy level, the language neural networks including the local language neural network and a cloud language neural network that executes on a cloud computer remotely from the user device.
3. The user device of embodiment 1, wherein the steps further include:
   detecting a second query provided by the user, the second query prompting the user device for help resolving a second issue related to the user device;
   generating second user manual context using the RAG neural network;
   identifying a second subset of the state information that is associated with the second query;
   uploading the second query, the second user manual context, and the second subset of the state information to a cloud computer that executes a cloud language neural network remotely from the user device; and
   receiving second device assistance information for diagnosing or resolving the second issue from the cloud computer.
4. The user device of embodiment 1, wherein the steps further include:
   detecting the first query by capturing, using a microphone of the user device, ambient sound from around the user device and then detecting, from the ambient sound, a voice command including the first query.
5. The user device of embodiment 4, wherein the first device assistance information contains the message, and the steps further include:
   generating speech based on a text representation of the message; and
   outputting the generated speech using a speaker of the user device.
6. The user device of embodiment 1, wherein the first device assistance information identifies the system action, and the steps further include:
   executing the system action by performing at least one of: (1) measuring a performance metric related to the user device or changing a setting related to the user device and (2) restarting the user device.
7. The user device of embodiment 1, wherein the steps further include:
   determining that the first query relates to at least one category, the at least one category including at least one of: video, audio, voice, and networking; and
   identifying the first subset of the state information as being associated with the at least one category.
8. The user device of embodiment 1, wherein the steps further include:
   determining, based on timing information indicated by the first query, a time window associated with the first issue; and
   identifying the first subset of the state information as being based on activity of the user device that occurred within the determined time window.
9. A method of providing device assistance to a user of a user device, the method comprising:
   detecting a first query provided by the user, wherein the first query prompts the user device for help resolving a first issue related to the user device;
   generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
   identifying, from state information about the user device, a first subset of the state information that is associated with the first query;
   generating second input tokens for a local language neural network based on the first query, the first user manual context, and the first subset of the state information, and then generating, using the local language neural network, first device assistance information for diagnosing or resolving the first issue, wherein the local language neural network performs operations at neurons of its layers based on the second input tokens to generate the first device assistance information, and wherein the first device assistance information contains at least one of: (1) identification of a system action for the user device to perform and (2) a message for the user; in response to the first device assistance information identifying the system action, executing the system action at the user device; and
   in response to the first device assistance information containing the message, outputting the message from the user device.
10. The method of embodiment 9, further comprising:
   determining at least one of: (1) a complexity of the first query and (2) a privacy level based on at least one of the first query and the first subset of the state information; and
   selecting the local language neural network from a plurality of language neural networks based on the at least one of the complexity and the privacy level, wherein the language neural networks include the local language neural network and a cloud language neural network that executes on a cloud computer remotely from the user device.
11. The method of embodiment 9, further comprising:
   detecting a second query provided by the user, wherein the second query prompts the user device for help resolving a second issue related to the user device;
   generating second user manual context using the RAG neural network;
   identifying a second subset of the state information that is associated with the second query;
   uploading the second query, the second user manual context, and the second subset of the state information to a cloud computer that executes a cloud language neural network remotely from the user device; and
   receiving second device assistance information for diagnosing or resolving the second issue from the cloud computer.
12. The method of embodiment 9, further comprising:
   detecting the first query by capturing, using a microphone of the user device, ambient sound from around the user device and then detecting, from the ambient sound, a voice command including the first query.
13. The method of embodiment 12, wherein the first device assistance information contains the message, the method further comprising:
   generating speech based on a text representation of the message; and
   outputting the generated speech using a speaker of the user device.
14. The method of embodiment 9, wherein the first device assistance information identifies the system action, the method further comprising:
   executing the system action by performing at least one of: (1) measuring a performance metric related to the user device or changing a setting related to the user device and (2) restarting the user device.
15. The method of embodiment 9, further comprising:
   determining that the first query relates to at least one category, wherein the at least one category includes at least one of: video, audio, voice, and networking; and
   identifying the first subset of the state information as being associated with the at least one category.
16. The method of embodiment 9, further comprising:
   determining, based on timing information indicated by the first query, a time window associated with the first issue; and
   identifying the first subset of the state information as being based on activity of the user device that occurred within the determined time window.
17. A non-transitory, computer-readable medium comprising instructions that are executable in a user device, wherein the instructions when executed cause the user device to carry out a method of providing device assistance to a user of the user device, and wherein the method comprises:
   detecting a first query provided by the user, the first query prompting the user device for help resolving a first issue related to the user device;
   generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
   identifying, from state information about the user device, a first subset of the state information that is associated with the first query;
   generating second input tokens for a local language neural network based on the first query, the first user manual context, and the first subset of the state information, and then generating, using the local language neural network, first device assistance information for diagnosing or resolving the first issue, the local language neural network performing operations at neurons of its layers based on the second input tokens to generate the first device assistance information, and the first device assistance information containing at least one of: (1) identification of a system action for the user device to perform and (2) a message for the user;
   in response to the first device assistance information identifying the system action, executing the system action at the user device; and
   in response to the first device assistance information containing the message, outputting the message from the user device.
18. The non-transitory, computer-readable medium of embodiment 17, wherein the method further comprises:
   determining at least one of: (1) a complexity of the first query and (2) a privacy level based on at least one of the first query and the first subset of the state information; and
   selecting the local language neural network from a plurality of language neural networks based on the at least one of the complexity and the privacy level, the language neural networks including the local language neural network and a cloud language neural network that executes on a cloud computer remotely from the user device.
19. The non-transitory, computer-readable medium of embodiment 17, wherein the method further comprises:
   detecting a second query provided by the user, the second query prompting the user device for help resolving a second issue related to the user device;
   generating second user manual context using the RAG neural network;
   identifying a second subset of the state information that is associated with the second query;
   uploading the second query, the second user manual context, and the second subset of the state information to a cloud computer that executes a cloud language neural network remotely from the user device; and
   receiving second device assistance information for diagnosing or resolving the second issue from the cloud computer.
20. The non-transitory, computer-readable medium of embodiment 17, wherein the method further comprises:
   detecting the first query by capturing, using a microphone of the user device, ambient sound from around the user device and then detecting, from the ambient sound, a voice command including the first query.

## Claims

1. A user device including a processor and memory, wherein the processor executes instructions stored in the memory to provide device assistance to a user of the user device by performing the following steps:
detecting a first query provided by the user, the first query prompting the user device for help resolving a first issue related to the user device;
generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
identifying, from state information about the user device, a first subset of the state information that is associated with the first query;
generating second input tokens for a local language neural network based on the first query, the first user manual context, and the first subset of the state information, and then generating, using the local language neural network, first device assistance information for diagnosing or resolving the first issue, the local language neural network performing operations at neurons of its layers based on the second input tokens to generate the first device assistance information, and the first device assistance information containing at least one of: (1) identification of a system action for the user device to perform and (2) a message for the user;
in response to the first device assistance information identifying the system action, executing the system action at the user device; and
in response to the first device assistance information containing the message, outputting the message from the user device.

2. The user device of claim 1, wherein the steps further include:
determining at least one of: (1) a complexity of the first query and (2) a privacy level based on at least one of the first query and the first subset of the state information; and
selecting the local language neural network from a plurality of language neural networks based on the at least one of the complexity and the privacy level, the language neural networks including the local language neural network and a cloud language neural network that executes on a cloud computer remotely from the user device.

3. The user device of claim 1 or 2, wherein the steps further include:
detecting a second query provided by the user, the second query prompting the user device for help resolving a second issue related to the user device;
generating second user manual context using the RAG neural network;
identifying a second subset of the state information that is associated with the second query;
uploading the second query, the second user manual context, and the second subset of the state information to a cloud computer that executes a cloud language neural network remotely from the user device; and
receiving second device assistance information for diagnosing or resolving the second issue from the cloud computer.

4. The user device of one of the previous claims, wherein the steps further include:
detecting the first query by capturing, using a microphone of the user device, ambient sound from around the user device and then detecting, from the ambient sound, a voice command including the first query,
in particular,
wherein the first device assistance information contains the message, and the steps further include:
generating speech based on a text representation of the message; and
outputting the generated speech using a speaker of the user device.

5. The user device of one of the previous claims, wherein the first device assistance information identifies the system action, and the steps further include:
executing the system action by performing at least one of: (1) measuring a performance metric related to the user device or changing a setting related to the user device and (2) restarting the user device.

6. The user device of one of the previous claims, wherein the steps further include:
determining that the first query relates to at least one category, the at least one category including at least one of: video, audio, voice, and networking; and
identifying the first subset of the state information as being associated with the at least one category,
and/or
determining, based on timing information indicated by the first query, a time window associated with the first issue; and
identifying the first subset of the state information as being based on activity of the user device that occurred within the determined time window.

7. A method of providing device assistance to a user of a user device, the method comprising:
detecting a first query provided by the user, wherein the first query prompts the user device for help resolving a first issue related to the user device;
generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
identifying, from state information about the user device, a first subset of the state information that is associated with the first query;
generating second input tokens for a local language neural network based on the first query, the first user manual context, and the first subset of the state information, and then generating, using the local language neural network, first device assistance information for diagnosing or resolving the first issue, wherein the local language neural network performs operations at neurons of its layers based on the second input tokens to generate the first device assistance information, and wherein the first device assistance information contains at least one of: (1) identification of a system action for the user device to perform and (2) a message for the user;
in response to the first device assistance information identifying the system action, executing the system action at the user device; and
in response to the first device assistance information containing the message, outputting the message from the user device.

8. The method of claim 7, further comprising:
determining at least one of: (1) a complexity of the first query and (2) a privacy level based on at least one of the first query and the first subset of the state information; and
selecting the local language neural network from a plurality of language neural networks based on the at least one of the complexity and the privacy level, wherein the language neural networks include the local language neural network and a cloud language neural network that executes on a cloud computer remotely from the user device.

9. The method of claim 7 or 8, further comprising:
detecting a second query provided by the user, wherein the second query prompts the user device for help resolving a second issue related to the user device;
generating second user manual context using the RAG neural network;
identifying a second subset of the state information that is associated with the second query;
uploading the second query, the second user manual context, and the second subset of the state information to a cloud computer that executes a cloud language neural network remotely from the user device; and
receiving second device assistance information for diagnosing or resolving the second issue from the cloud computer.

10. The method of one of claims 7 to 9, further comprising:
detecting the first query by capturing, using a microphone of the user device, ambient sound from around the user device and then detecting, from the ambient sound, a voice command including the first query,
in particular,
wherein the first device assistance information contains the message, the method further comprising:
generating speech based on a text representation of the message; and
outputting the generated speech using a speaker of the user device.

11. The method of one of claims 7 to 10, wherein the first device assistance information identifies the system action, the method further comprising:
executing the system action by performing at least one of: (1) measuring a performance metric related to the user device or changing a setting related to the user device and (2) restarting the user device.

12. The method of one of claims 7 to 11, further comprising:
determining that the first query relates to at least one category, wherein the at least one category includes at least one of: video, audio, voice, and networking; and
identifying the first subset of the state information as being associated with the at least one category,
and/or
determining, based on timing information indicated by the first query, a time window associated with the first issue; and
identifying the first subset of the state information as being based on activity of the user device that occurred within the determined time window.

13. A non-transitory, computer-readable medium comprising instructions that are executable in a user device, wherein the instructions when executed cause the user device to carry out a method of providing device assistance to a user of the user device, and wherein the method comprises:
detecting a first query provided by the user, the first query prompting the user device for help resolving a first issue related to the user device;
generating first input tokens for a retrieval-augmented (RAG) neural network based on the first query and a user manual of the user device, and then generating first user manual context using the RAG neural network, the RAG neural network computing query embeddings based on query tokens of the first input tokens and computing user manual embeddings based on user manual tokens of the first input tokens, and the RAG neural network comparing the query embeddings to the user manual embeddings to determine the first user manual context;
identifying, from state information about the user device, a first subset of the state information that is associated with the first query;
generating second input tokens for a local language neural network based on the first query, the first user manual context, and the first subset of the state information, and then generating, using the local language neural network, first device assistance information for diagnosing or resolving the first issue, the local language neural network performing operations at neurons of its layers based on the second input tokens to generate the first device assistance information, and the first device assistance information containing at least one of: (1) identification of a system action for the user device to perform and (2) a message for the user;
in response to the first device assistance information identifying the system action, executing the system action at the user device; and
in response to the first device assistance information containing the message, outputting the message from the user device.

14. The non-transitory, computer-readable medium of claim 13, wherein the method further comprises:
determining at least one of: (1) a complexity of the first query and (2) a privacy level based on at least one of the first query and the first subset of the state information; and
selecting the local language neural network from a plurality of language neural networks based on the at least one of the complexity and the privacy level, the language neural networks including the local language neural network and a cloud language neural network that executes on a cloud computer remotely from the user device.

15. The non-transitory, computer-readable medium of claim 13 or 14, wherein the method further comprises:
detecting a second query provided by the user, the second query prompting the user device for help resolving a second issue related to the user device;
generating second user manual context using the RAG neural network;
identifying a second subset of the state information that is associated with the second query;
uploading the second query, the second user manual context, and the second subset of the state information to a cloud computer that executes a cloud language neural network remotely from the user device; and
receiving second device assistance information for diagnosing or resolving the second issue from the cloud computer,
and/or
detecting the first query by capturing, using a microphone of the user device, ambient sound from around the user device and then detecting, from the ambient sound, a voice command including the first query.
